# EUROPEAN PATENT APPLICATION

(11) **EP 4 414 811 A1**
(43) Date of publication of application: **14.08.2024**
(21) Application number: 22878196.9
(22) Date of filing: 15.08.2022
(51) Int. Cl.: G06F 3/01, G06T 19/00

(54) **INFORMATION PROCESSING DEVICE, INFORMATION PROCESSING METHOD, AND PROGRAM**

(30) Priority: 05.10.2021 JP 2021163987
(71) Applicant: Sony Group Corporation, Tokyo 108-0075 (JP)
(72) Inventor: ISHIKAWA, Tsuyoshi, Tokyo 108-0075 (JP); NAGANO, Keijiroh, Tokyo 108-0075 (JP); KIMURA, Jun, Tokyo 108-0075 (JP); YAMANO, Ikuo, Tokyo 108-0075 (JP); SHIROMA, Shin, Tokyo 108-0075 (JP)
(74) Representative: D Young & Co LLP
(86) International application number: PCT/JP2022/030844
(87) International publication number: WO 2023/058325

(57) **Abstract**

[Problem] To further improve convenience of a user in an operation of an object.

[Solution] An information processing apparatus includes: an acquisition unit that acquires motion information indicating a motion of a user; and an operation control unit that, in a case where an object is designated by the user, switches a mode related to an operation of the object when contact information of a third finger is further acquired while contact information of a first finger and contact information of a second finger of the user are acquired by the acquisition unit.

## Description

### TECHNICAL FIELD

The present disclosure relates to an information processing apparatus, an information processing method, and a program.

### BACKGROUND ART

In recent years, with the spread of augmented reality (AR) and virtual reality (VR), a technology for operating an object such as a virtual object has been developed. For example, Patent Document 1 discloses a hand glove for extended reality (XR) in which a bending sensor is mounted at a position of an index finger. The hand glove described in Patent Document 1 determines a finger position pose from sensor data obtained by the bending sensor mounted at a position of an index finger and a contact sensor mounted on a thumb.

### CITATION LIST

### PATENT DOCUMENT

Patent Document 1: Japanese Patent Application Laid-Open No. 2018-014119

### SUMMARY OF THE INVENTION

### PROBLEMS TO BE SOLVED BY THE INVENTION

However, in the technique described in Patent Document 1, when a user operates a virtual object, the operation may be complicated by fine adjustment of the position of the index finger.

Therefore, the present disclosure proposes a new and improved information processing apparatus, information processing method, and program capable of further improving the convenience of the user in the operation of the object.

### SOLUTIONS TO PROBLEMS

According to the present disclosure, provided is an information processing apparatus including: an acquisition unit that acquires motion information indicating a motion of a user; and an operation control unit that, in a case where an object is designated by the user, switches a mode related to an operation of the object when contact information of a third finger is further acquired while contact information of a first finger and contact information of a second finger of the user are acquired by the acquisition unit.

Furthermore, according to the present disclosure, provided is an information processing method executed by a computer, the information processing method including: acquiring motion information indicating a motion of a user; and in a case where an object is designated by the user, switching a mode related to an operation of the object when contact information of a third finger is further acquired while contact information of a first finger and contact information of a second finger of the user are acquired.

Furthermore, according to the present disclosure, provided is a program causing a computer to realize: an acquisition function of acquiring motion information indicating a motion of a user; and an operation control function of, in a case where an object is designated by the user, switches a mode related to an operation of the object when contact information of a third finger is further acquired while contact information of a first finger and contact information of a second finger of the user are acquired by the acquisition function.

### BRIEF DESCRIPTION OF DRAWINGS

Fig. 1 is an explanatory diagram for explaining an overview of an information processing system according to the present disclosure.
Fig. 2 is an explanatory diagram for explaining a functional configuration example of AR glasses according to the present disclosure.
Fig. 3 is an explanatory diagram for explaining an overview regarding an operation of a virtual object according to the present disclosure.
Fig. 4 is an explanatory diagram for explaining switching of an operation mode of a virtual object according to the present disclosure.
Fig. 5 is an explanatory diagram for explaining a specific example regarding switching of an operation mode according to second contact information according to the present disclosure.
Fig. 6 is an explanatory diagram for explaining an example regarding an operation in a remote moving mode according to the present disclosure.
Fig. 7 is an explanatory diagram for explaining a specific example regarding switching of an operation mode according to second contact information according to the present disclosure.
Fig. 8 is an explanatory diagram for explaining an example of operation processing of the AR glasses according to the present disclosure.
Fig. 9 is an explanatory diagram for explaining AR glasses according to a first modified example.
Fig. 10 is an explanatory diagram for explaining AR glasses according to a second modified example.
Fig. 11 is a block diagram illustrating an example of a hardware configuration of the AR glasses according to the present disclosure.

### MODE FOR CARRYING OUT THE INVENTION

Hereinafter, a preferred embodiment of the present disclosure will be described in detail with reference to the accompanying drawings. Note that, in the present specification and the drawings, components having substantially the same functional configuration are denoted by the same reference sign, and redundant descriptions are omitted.

Furthermore, the "mode for carrying out the invention" is described according to the order of items described below.
1. Overview of information processing system
1.1. Overview
1.2. Functional configuration example of AR glasses 10
2. Example
2.1. Overview
2.2. Details
2.3. Specific example of operation mode
3. Example of operation processing
4. Example of action and effect
5. Modified examples
5.1. First modified example
5.2. Second modified example
6. Hardware configuration example
7. Supplement

### <<1. Overview of information processing system>>

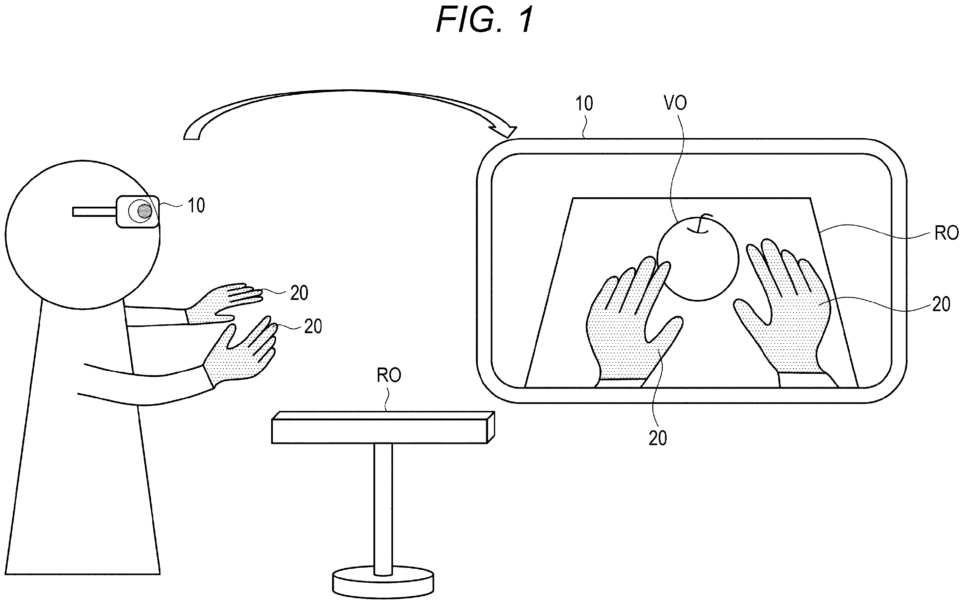

An embodiment of the present disclosure relates to an information processing system capable of further improving convenience of a user in an operation of an object. Hereinafter, an overview of the information processing system according to the present disclosure will be described with reference to Fig. 1.

### <1.1. Overview>

Fig. 1 is an explanatory diagram for explaining an overview of the information processing system according to the present disclosure. As illustrated in Fig. 1, the information processing system according to the present disclosure includes AR glasses 10 and hand gloves 20.

The AR glasses 10 according to the present disclosure are an example of an information processing apparatus, and are smart glasses having an AR technology. The AR glasses 10 provide various kinds of content to a user wearing the AR glasses 10 through a lens having a function as a display.

For example, the user wearing the AR glasses 10 can view a screen displayed as if a virtual object (for example, apple) VO that is not actually placed on a tabletop is placed on a real object (for example, a table) RO through the lens as illustrated in Fig. 1.

Furthermore, a hand model is superimposed on the hand of the user wearing the AR glasses 10. The user may select or manipulate virtual objects on the display, for example, via a hand model superimposed on the user's hand. Note that the hand model is an example of a virtual hand, and may be displayed superimposed on the hand of the user, or may be superimposed on the hand of the user on the background.

Note that a position, posture, or the like of the hand model is determined according to a position of the hand of the user, a posture of the user, or the like. Alternatively, it may be determined according to a position of the hand glove 20 worn by the user, a posture of the hand glove 20, or the like.

Furthermore, the AR glasses 10 according to the present disclosure acquire motion information indicating a motion of the user. Then, in a case where an object is designated by the user, the AR glasses 10 according to the present disclosure switch a mode related to the operation of the object when the contact information of the third finger is further acquired while the acquired contact information of the first finger and the acquired contact information of the second finger of the user are acquired.

Note that the information processing apparatus according to the present disclosure may be a head mounted display (HMD) including an AR or VR technology, or may be a server provided separately from smart glasses or the HMD.

Each of the hand gloves 20 according to the present disclosure includes a contact sensor that acquires contact information of a finger of the worn user. For example, the hand glove 20 detects contact between the first finger and the second finger. Furthermore, the hand glove 20 detects contact between the third finger and the first finger or the second finger. Furthermore, the hand glove 20 may detect contact of the fourth finger or the fifth finger.

Furthermore, the hand glove 20 transmits the contact information of the detected finger to the AR glasses 10. At this time, the communication method of the hand glove 20 and the AR glasses 10 may be any communication method. For example, the hand glove 20 may transmit the contact information of the finger to the AR glasses 10 by wireless communication or wired communication.

Furthermore, the hand glove 20 may include a sensor capable of acquiring bending information indicating a bending degree of a finger or a hand. In this case, the hand glove 20 may transmit the bending information to the AR glasses 10. In this case, the AR glasses 10 may determine the position or posture of the hand model of the user on the basis of the bending information of the finger or hand received from the hand glove 20.

Note that, in a case where the contact information of the user's finger is acquired by another method, the information processing system according to the present disclosure does not need to include the hand glove 20. For example, the contact information of the user's finger may be acquired from an image obtained by a camera 140 included in the AR glasses 10 according to the present disclosure.

Furthermore, as another example of acquiring the contact information of the user's finger, a contact sensor may be worn on the user's hand. For example, contact information of each finger may be detected by installing an electrode on the user's fingertip, or contact information of each finger may be detected by installing a pressure sensor on the fingertip. In the present specification, an example of acquiring the contact information of the user's finger by combining the camera 140 included in the AR glasses 10 and each piece of sensing information obtained by each of the hand gloves 20 will be mainly described.

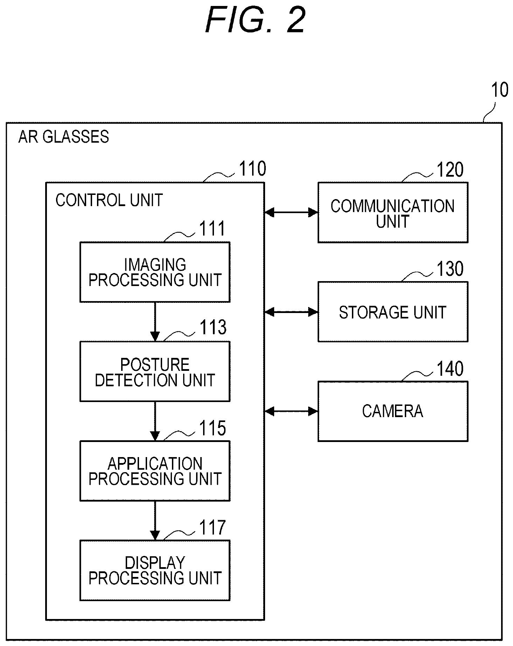

The overview of the information processing system according to the present disclosure has been described above. Next, a functional configuration example of the AR glasses 10 according to the present disclosure will be described in detail with reference to Fig. 2.

### <1.2. Functional configuration example of AR glasses 10>

Fig. 2 is an explanatory diagram for explaining a functional configuration example of the AR glasses 10 according to the present disclosure. As illustrated in Fig. 2, the AR glasses 10 according to the present disclosure include, for example, a control unit 110, a communication unit 120, a storage unit 130, and a camera 140.

### (Control unit 110)

The control unit 110 according to the present disclosure controls the overall operation of the AR glasses 10. As illustrated in Fig. 2, the control unit 110 includes an imaging processing unit 111, a posture detection unit 113, an application processing unit 115, and a display processing unit 117.

The imaging processing unit 111 according to the present disclosure executes various types of processing on an image obtained by the camera 140 as described later. For example, the imaging processing unit 111 determines whether or not the contact information of the user's finger can be detected. More specifically, the imaging processing unit 111 determines whether or not the contact of the first finger, the second finger, and the third finger of the user can be detected.

The posture detection unit 113 according to the present disclosure detects the posture of the user's finger using a video processed by the imaging processing unit 111. Furthermore, the posture detection unit 113 may detect the posture of the user's finger on the basis of various sensing information such as bending information of the user's finger or hand acquired from the hand glove 20.

The application processing unit 115 according to the present disclosure is an example of an acquisition unit, and acquires motion information indicating a motion of a finger of the user on the basis of information regarding a posture of the finger of the user detected by the posture detection unit 113.

For example, the application processing unit 115 determines whether or not the first finger and the second finger of the user have come into contact with each other. Furthermore, the application processing unit 115 determines whether or not the third finger of the user has come into contact with the first finger or the second finger.

Furthermore, the application processing unit 115 is an example of an operation control unit, and switches a mode related to the operation of the object when contact information of the third finger is further acquired while contact information of the first finger and contact information of the second finger of the user are acquired. Here, the object may be either a virtual object or a real object, but in the following description, an example of being a virtual object will be mainly described, and an example of a real object will be described later in a modified example.

For example, when second contact information indicating that the third finger of the user has come into contact with the first finger or the second finger is further acquired while first contact information indicating that the first finger has come into contact with the second finger is acquired, the application processing unit 115 switches a mode related to the operation of the virtual object. In the following description, the mode related to the operation of the virtual object may be expressed as an operation mode.

More specifically, the application processing unit 115 may switch the operation mode from the first mode to the second mode when the first contact information is acquired. Furthermore, the application processing unit 115 may switch the operation mode from the second mode to the third mode when the second contact information is further acquired while the first contact information is acquired. Here, specific examples of various operation modes including the first mode, the second mode, and the third mode will be described later.

Furthermore, the application processing unit 115 may switch the operation mode from the second mode to the third mode when the second contact information is further acquired for less than a predetermined time while the first contact information is acquired. Then, the application processing unit 115 may switch the operation mode from the second mode to the fourth mode when the second contact information is further acquired for a predetermined time or more while the first contact information is acquired.

The display processing unit 117 according to the present disclosure is an example of a display control unit, and executes various types of processing of controlling display on a lens according to a feature of a virtual object. For example, the display processing unit 117 may control a size of the hand model of the user according to the size of the virtual object designated by the user.

Furthermore, the display processing unit 117 may display a ray used by the user to designate an object. Although the details of the ray will be described later, the user can designate the virtual object to be operated by applying the ray to the virtual object.

### (Communication unit 120)

The communication unit 120 according to the present disclosure is an example of an acquisition unit, and acquires motion information indicating a motion of the user from the hand glove 20. For example, the communication unit 120 may receive the contact information of the first finger, the second finger, or the third finger of the user from the hand glove 20.

### (Storage unit 130)

The storage unit 130 according to the present disclosure holds software and various data. For example, the storage unit 130 stores a virtual object to be operated by designation of the user. Furthermore, the storage unit 130 holds a state of the operation mode of the virtual object designated by the user.

### (Camera 140)

The camera 140 according to the present disclosure acquires various videos such as a video of a hand of the user. The camera 140 according to the present disclosure is desirably a camera capable of acquiring distance information, such as a stereo camera or a time of flight (ToF) camera.

The functional configuration example of the AR glasses 10 according to the present disclosure has been described above. Next, an example of the AR glasses 10 according to the present disclosure will be described in detail.

### <<2. Examples>>

### <2.1. Overview>

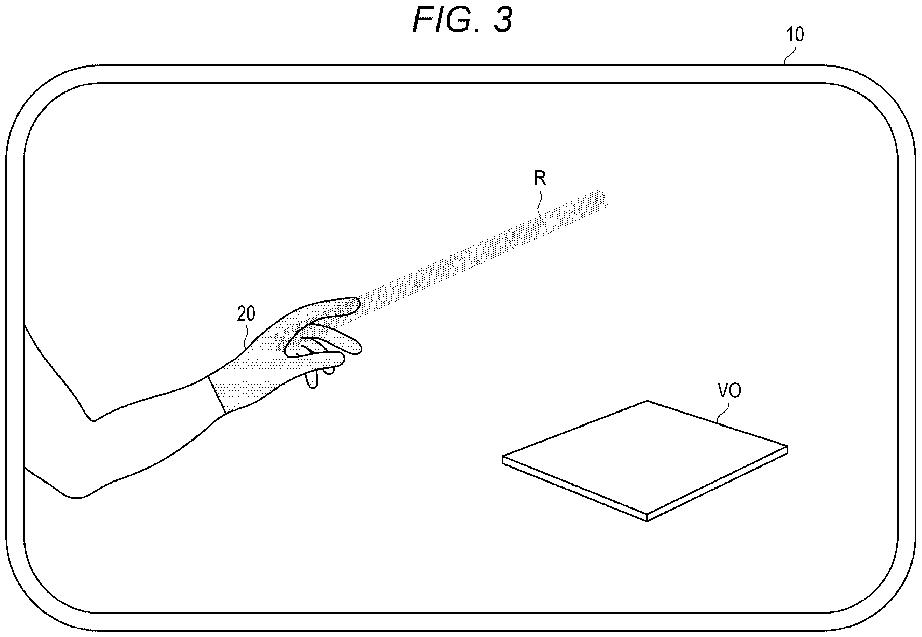

Fig. 3 is an explanatory diagram for explaining an overview related to the operation of the virtual object VO according to the present disclosure. Fig. 3 is an example of a video that the user can see through the lens of the AR glasses 10. The AR glasses 10 display the virtual object VO in the real space as described above. Furthermore, the user wearing the AR glasses 10 can see the real space such as the hand of the user wearing the hand glove 20 through the lens of the AR glasses 10.

Furthermore, the display processing unit 117 may perform display such that a ray R is emitted from the hand of the user. Then, for example, the user designates the virtual object VO as the operation target by applying the ray R to the virtual object VO. As described above, the mode in which the virtual object can be designated is an example of the first mode, and may be referred to as an idle mode in the following description.

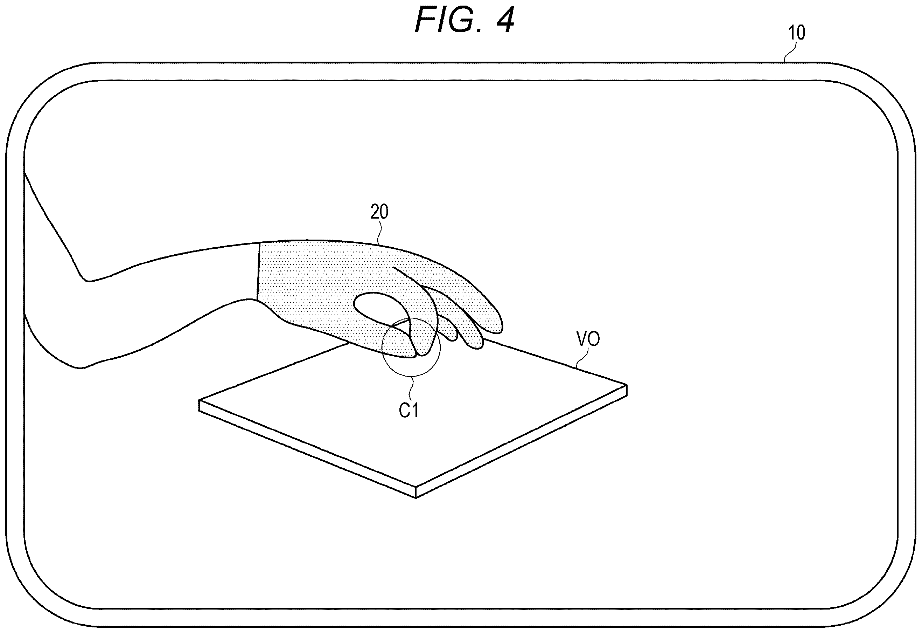

Fig. 4 is an explanatory diagram for explaining switching of the operation mode of the virtual object VO according to the present disclosure. In the following description, a first finger is described as a thumb, a second finger is described as an index finger, and a third finger is described as a middle finger, but the first finger, the second finger, and the third finger may be any finger of the user. For example, the first finger may be an index finger, the second finger may be a thumb, and the third finger may be a ring finger.

Furthermore, an example in which the first finger, the second finger, and the third finger are fingers of the left hand will be mainly described, but the first finger, the second finger, and the third finger may be fingers of either one of the left hand and the right hand, or may include fingers of both the left hand and the right hand.

The application processing unit 115 may switch the operation mode from the idle mode to a direct movement mode when the virtual object VO is designated by the user and first contact information C1 indicating that the thumb of the user has come in contact with the index finger is acquired. Here, the direct movement mode is an example of the second mode, and may be, for example, a mode in which the virtual object VO held by the user can be directly moved.

In this manner, the user can hold the virtual object VO by bringing the thumb and the index finger into contact with each other at a certain position of the virtual object VO, for example, and can move the virtual object VO by moving the user's hand back and forth or right and left.

On the other hand, conventionally, when the operation mode related to the virtual object VO is changed from the movement mode, it is necessary to change a position at which the virtual object VO is held or to perform an operation of switching from the movement mode to another mode such as the posture change mode with the other hand.

As described above, when the mode related to the operation of the virtual object VO is changed, an operation step corresponding to the change occurs, and thus, the burden on the user may increase.

Therefore, in a case where the virtual object VO is designated by the user, the AR glasses 10 according to the present disclosure switch the mode related to the operation of the virtual object VO when the second contact information indicating that the middle finger is in contact with the thumb or the index finger is further acquired while the acquired first contact information indicating that the thumb and the index finger of the user are in contact with each other is acquired.

### <2.2. Details>

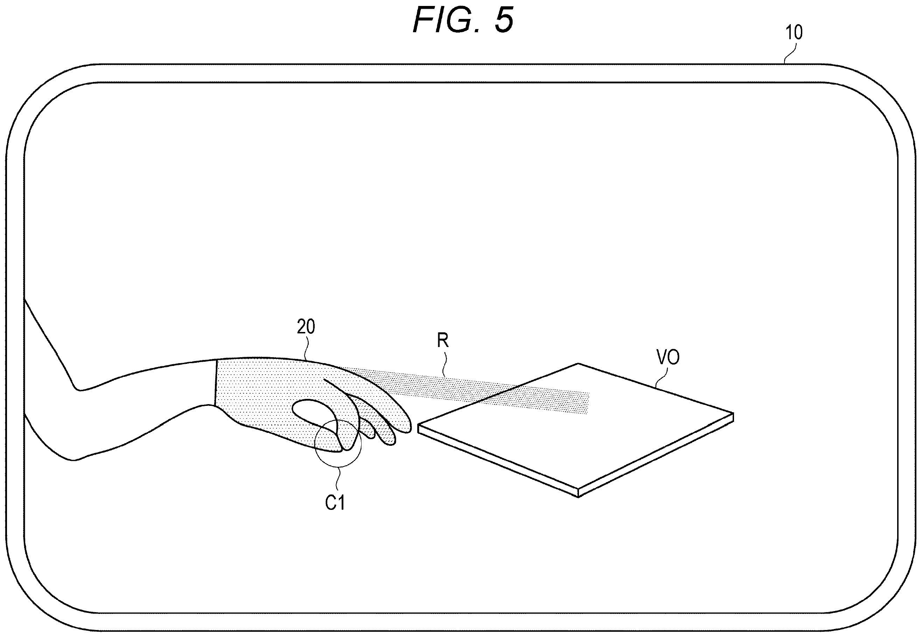

Fig. 5 is an explanatory diagram for explaining a specific example regarding switching of an operation mode according to second contact information according to the present disclosure. For example, the application processing unit 115 may switch the operation mode of the virtual object from the direct movement mode to a remote movement mode when the second contact information is further acquired for less than a predetermined time while the first contact information is acquired.

Here, the predetermined time may be, for example, a time for which the middle finger taps the thumb or the index finger. In the following description, an operation in which the middle finger touches the thumb or the index finger for less than the predetermined time may be referred to as a tap operation.

Furthermore, in a case where the direct movement mode is switched to the remote movement mode by the tap operation of the user, for example, as illustrated in Fig. 5, a ray R connecting the user and the virtual object VO may be displayed. As a result, the user can select either the direct movement mode or the remote movement mode when moving the virtual object VO.

Then, the application processing unit 115 may move the virtual object VO when the hand of the user is moved left and right. For example, as the user's hand is moved left and right, a direction of the ray R released from the user's hand is also moved. As a result, the virtual object VO located at a tip of the ray R is also moved in conjunction with the ray R.

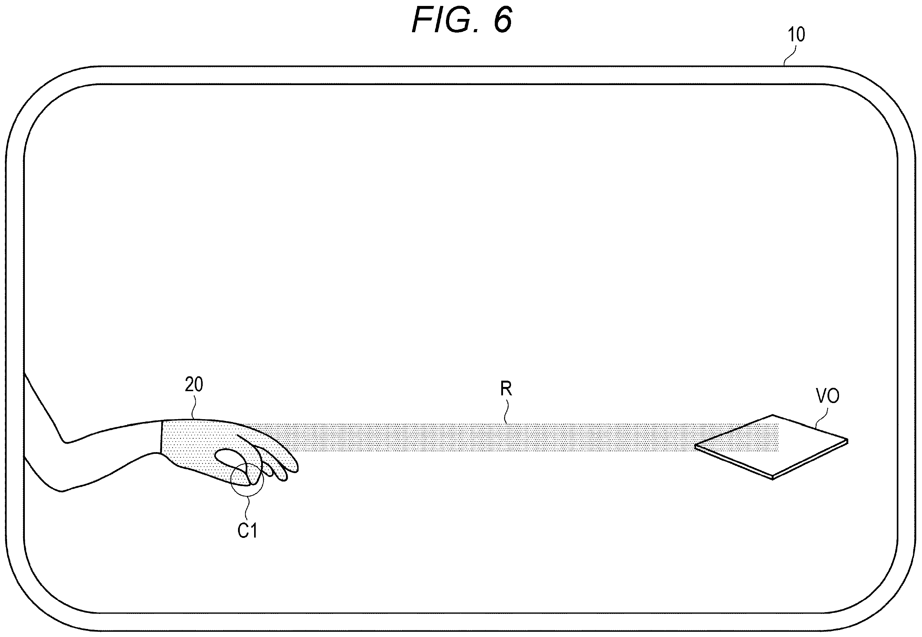

Fig. 6 is an explanatory diagram for explaining an example related to the operation in the remote moving mode according to the present disclosure. When the remote moving mode of the virtual object VO is set, the application processing unit 115 may change a length of the ray R by moving the hand of the user back and forth.

For example, in a case where the user pulls a hand frontward (that is, the user pulls his/her hand in a body direction.), the application processing unit 115 may increase the length of the ray R according to a distance by which the hand is pulled.

Furthermore, in a case where the user extends the hand to a back side (that is, the user extends his/her hand in a direction opposite to the body direction of the user.), the application processing unit 115 may shorten the length of the ray R according to a distance by which the hand is extended.

Furthermore, the application processing unit 115 may switch the operation mode of the virtual object from the direct movement mode to a posture adjustment mode when the second contact information is further acquired for a predetermined time or more while the first contact information is acquired.

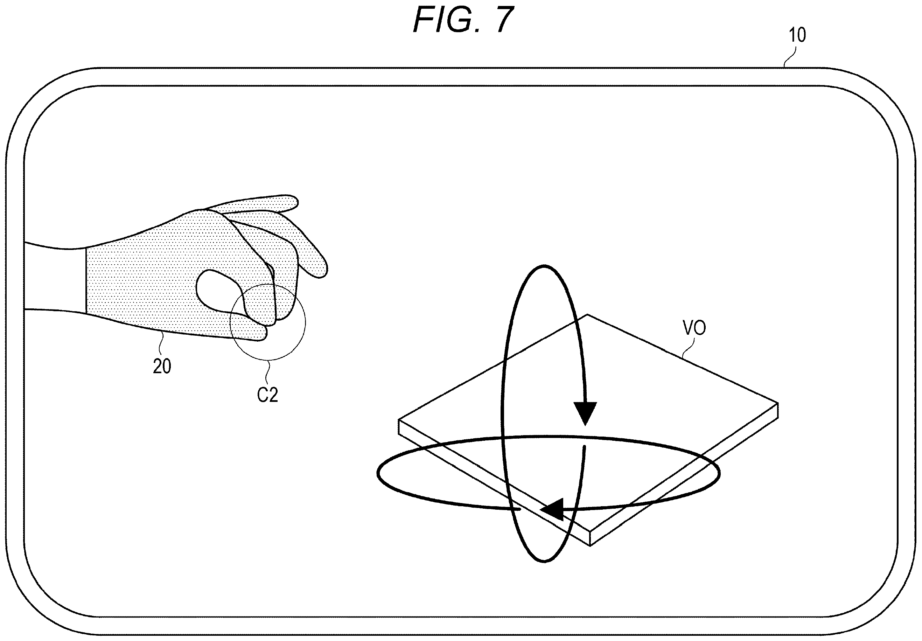

Fig. 7 is an explanatory diagram for explaining a specific example regarding switching of an operation mode according to second contact information according to the present disclosure. In the following description, an operation in which the middle finger touches the thumb or the index finger for less than a predetermined time is expressed as a tap operation, whereas an operation in which the middle finger touches the thumb or the index finger for a predetermined time or more is expressed as a hold operation in some cases.

The application processing unit 115 may switch the operation mode from the direct movement mode to the posture adjustment mode when a hold operation C2 is performed by the user. In the posture adjustment mode, the virtual object VO may be rotated according to a change in a direction of the wrist or hand of the user.

Furthermore, in the posture adjustment mode, there is a possibility that the wrist of the user cannot be rotated even if the virtual object VO is to be rotated by 180 degrees (for example, yaw rotation) only by the rotation of the hand of the user. Therefore, in the posture adjustment, an operation of regrasping by the user may be applied.

For example, even in a case where the middle finger is separated from the thumb or the index finger, the application processing unit 115 may maintain the posture adjustment mode as long as the thumb and the index finger are in contact with each other. However, in a state where the middle finger is separated from the thumb or the index finger, the posture of the hand is not reflected on the posture of the virtual object VO.

As a result, the user can adjust the posture of the virtual object VO again by returning the posture of the hand to a state in which the user can easily hold the virtual object VO and then performing the hold operation. As a result, the user can resume the posture adjustment of the virtual object VO with a comfortable hand posture.

According to the example described above, an example has been described in which the first mode is the idle mode, the second mode is the direct movement mode, the third mode is the remote movement mode, and the fourth mode is the posture adjustment mode. However, the operation mode according to the present disclosure is not limited to such an example. Next, another example of the operation mode will be described.

### <2.3. Specific example of operation mode>

### (Forced movement mode)

A forced movement mode is a mode in which the lock can be released in the operation of the virtual object whose position and posture are locked.

For example, in a case where a certain virtual object is designated, the application processing unit 115 switches to the direct movement mode when first contact information indicating that the thumb and the index finger have come into contact with each other is acquired. On the other hand, a virtual object whose position and posture are locked may be set so as not to be movable by a user's operation.

Here, in a case where a tap operation with the middle finger is further performed, the application processing unit 115 may switch the operation mode from the direct movement mode to the forced movement mode. As a result, the application processing unit 115 may permit movement of even a virtual object whose position and posture are locked.

### (Snap mode)

A snap mode is a mode in which the virtual object held by the user can be moved to an arbitrary position.

For example, in a case where a certain virtual object is designated, the application processing unit 115 switches to the direct movement mode when first contact information indicating that the thumb and the index finger have come into contact with each other is acquired. On the other hand, there is a case where the virtual object can be moved only to a specific position such as an intersection of grids.

Here, in a case where a tap operation with the middle finger is further performed, the application processing unit 115 may switch the operation mode from the direct movement mode to the snap mode. As a result, the application processing unit 115 may permit arrangement of the virtual object not only at a specific position but also at an arbitrary position.

### (Numerical value change width mode)

A numerical value change width mode is a mode in which the numerical value of the movement amount of the virtual object held by the user can be changed.

For example, in a case where a certain virtual object is designated, the application processing unit 115 switches to the direct movement mode when first contact information indicating that the thumb and the index finger have come into contact with each other is acquired. On the other hand, the virtual object may be movable for each certain numerical value.

Here, in a case where a tap operation with the middle finger is further performed, the application processing unit 115 may switch the operation mode from the direct mode to the numerical value change width mode. As a result, the application processing unit 115 may change a certain numerical value according to the number of middle finger taps or the direction or position of the user's hand.

### (Confirmation decision mode)

A confirmation decision mode is a mode in which the operation of the virtual object can be decided.

For example, in a case where a certain virtual object is designated, the application processing unit 115 switches to the direct movement mode when first contact information indicating that the thumb and the index finger have come into contact with each other is acquired. Then, the application processing unit 115 moves the virtual object according to the operation by the movement of the hand of the user.

Here, in a case where a tap operation with the middle finger is further performed, the application processing unit 115 may switch the operation mode from the direct movement mode to the confirmation decision mode. In a case where the mode is switched to the confirmation movement mode, the position of the virtual object is fixed at the position where the user has moved. According to the confirmation decision mode, the intention level of decision of the user is high, and the risk of erroneous operation can be reduced.

### (Rotation axis limited mode)

A rotation axis limited mode is a mode in which a rotation axis for posture adjustment in posture adjustment mode can be limited. Here, the rotation axis for adjusting the posture includes, for example, axes such as yaw, pitch, and roll.

For example, in a case where a certain virtual object is designated, the application processing unit 115 switches to the direct movement mode when first contact information indicating that the thumb and the index finger have come into contact with each other is acquired.

Here, in a case where a tap operation with the middle finger is further performed, the application processing unit 115 may switch the operation mode from the direct movement mode to the rotation axis limited mode. In a case where the mode is switched to the rotation axis limited mode, the application processing unit 115 may limit the rotation axis related to the posture adjustment of the virtual object to, for example, any one axis or two axes of yaw, pitch, and roll.

### (Size change mode)

A size change mode is a mode in which a size of the virtual object can be changed.

For example, in a case where a certain virtual object is designated, the application processing unit 115 switches to the direct movement mode when first contact information indicating that the thumb and the index finger have come into contact with each other is acquired.

Here, in a case where a tap operation with the middle finger is further performed, the application processing unit 115 may switch the operation mode from the direct movement mode to the size change mode. In a case where the mode is switched to the size change mode, the application processing unit 115 may change the size of the virtual object according to the position or posture of the hand of the user.

### (Color change mode)

A color change mode is a mode in which the color of the virtual object can be changed.

For example, in a case where a certain virtual object is designated, the application processing unit 115 switches to the direct movement mode when first contact information indicating that the thumb and the index finger have come into contact with each other is acquired.

Here, in a case where a tap operation with the middle finger is further performed, the application processing unit 115 may switch the operation mode from the direct movement mode to the color change mode. In a case where the mode is switched to the color change mode, the application processing unit 115 may change the color of the virtual object according to the position or posture of the hand of the user.

### (Mode selection mode)

A mode selection mode is, for example, a mode including a selection screen on which various operation modes described above can be selected.

For example, in a case where a certain virtual object is designated, the application processing unit 115 switches to the direct movement mode when first contact information indicating that the thumb and the index finger have come into contact with each other is acquired.

Here, in a case where a tap operation with the middle finger is further performed, the application processing unit 115 may switch the operation mode from the direct movement mode to the mode selection mode. In a case where the mode is switched to the mode selection mode, the application processing unit 115 may display, for example, a selection screen including at least two or more of the various operation modes described above. Then, in a case where one operation mode is selected according to the user's operation, the application processing unit 115 may switch from the direct movement mode to the selected mode.

Although the operation mode described above is for the case where the second mode is switched to the third mode by the middle finger tap operation, each operation mode may be assigned to any one of the first mode, the second mode, the third mode, and the fourth mode.

Furthermore, the application processing unit 115 may switch to the above-described operation mode by a predetermined motion of the user with the fourth finger, the fifth finger, or the like, instead of the tap operation with the third finger.

Furthermore, the application processing unit 115 may switch the mode related to the operation of the virtual object on the basis of the posture information of the hand of the user detected by the posture detection unit 113. For example, when the second contact information is further acquired while the first contact information described above is acquired, the application processing unit 115 may switch the mode related to the operation of the virtual object on the basis of the upper and lower sides of the palm of the user or the position and posture of the hand.

Furthermore, the application processing unit 115 may switch between a plurality of operation modes in accordance with the number of middle finger taps.

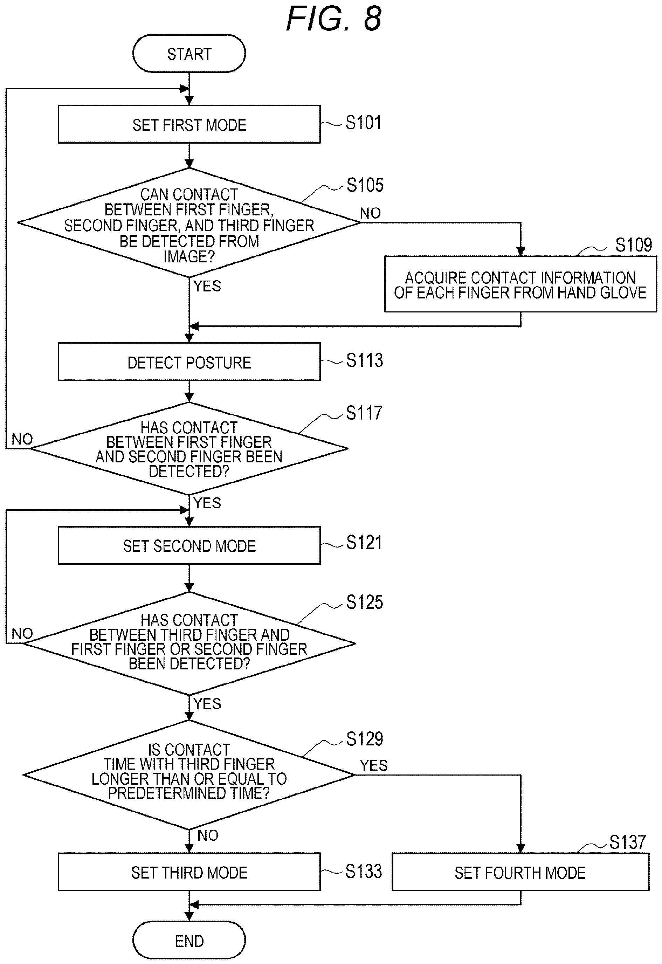

The examples of the AR glasses 10 according to the present disclosure have been described above. Next, an example of operation processing of the AR glasses 10 according to the present disclosure will be described with reference to Fig. 8.

### <<3. Example of operation processing>>

Fig. 8 is an explanatory diagram for explaining an example of operation processing of the AR glasses 10 according to the present disclosure. First, the application processing unit 115 sets the first mode as the operation mode of the virtual object (S101).

Subsequently, the imaging processing unit 111 determines whether or not contact between the first finger, the second finger, and the third finger can be detected from the image obtained by image capturing by the camera 140 (S105). In a case where the contact of each finger can be detected (S105/Yes), the control unit 110 advances the processing to S113, and in a case where the contact of each finger cannot be detected (S105/No), the control unit 110 advances the processing to 109.

In a case where the contact of each finger cannot be detected (S105/No), the communication unit 120 acquires the contact information of each finger from the hand glove 20 (S109).

In a case where the contact of each finger can be detected (S105/Yes), and after the contact information of the finger is acquired from the hand glove 20 (S109), the posture detection unit 113 detects the posture of the user's hand and finger (S113).

Then, the application processing unit 115 determines whether or not contact between the first finger and the second finger of the user has been detected (S117). In a case where the contact between the first finger and the second finger of the user has been detected (S117/Yes), the control unit 110 advances the processing to S121, and in a case where the contact between the first finger and the second finger of the user has not been detected (S117/No), the control unit 110 returns the processing to S101 again.

In a case where the contact between the first finger and the second finger of the user is detected (S117/Yes), the application processing unit 115 switches the mode related to the operation of the virtual object from the first mode to the second mode (S121).

Then, the application processing unit 115 determines whether or not a contact between the third finger of the user and the first finger or the second finger has been detected (S125). In a case where the contact between the third finger of the user and the first finger or the second finger has been detected (S125/Yes), the control unit 110 advances the processing to S129, and in a case where the contact between the third finger of the user and the first finger or the second finger has not been detected (S125/No), the control unit 110 returns the processing to S121 again.

In a case where the contact between the third finger of the user and the first finger or the second finger has been detected (S125/Yes), the application processing unit 115 determines whether or not the contact time between the third finger and the first finger or the second finger is longer than or equal to a predetermined time (S129). In a case where the contact time is less than the predetermined time (S129/No), the control unit 110 advances the processing to S133, and in a case where the contact time is the predetermined time or more (S129/Yes), the control unit 110 advances the processing to S137.

In a case where the contact time is less than the predetermined time (S129/No), the application processing unit 115 switches the mode related to the operation of the virtual object from the second mode to the third mode by using the operation by the third finger of the user as a tap operation (S133), and the control unit 110 according to the present disclosure ends the processing.

In a case where the contact time is longer than or equal to the predetermined time (S129/Yes), the application processing unit 115 switches the mode related to the operation of the virtual object from the second mode to the fourth mode by using the operation by the third finger of the user as the hold operation (S137), and the AR glasses 10 according to the present disclosure end the processing.

### <4. Example of action and effect>

As described above, according to the AR glasses 10 according to the present disclosure, various effects can be realized. For example, in a case where the first finger, the second finger, and the third finger are one of the left hand and the right hand of the user, the user can change the mode related to the operation of the virtual object by the operation with one hand, and the application processing unit 115 can switch various operation modes even in a situation where the user cannot use both hands, for example.

Furthermore, since the application processing unit 115 according to the present disclosure can switch the operation mode by the operation with the first finger, the second finger, and the third finger, it is possible to suppress complication of the operation accompanying the switching of the operation mode and further reduce the number of processing steps.

Furthermore, the application processing unit 115 according to the present disclosure can transition a plurality of operation modes according to a request of the user by repeating a tap operation with the third finger.

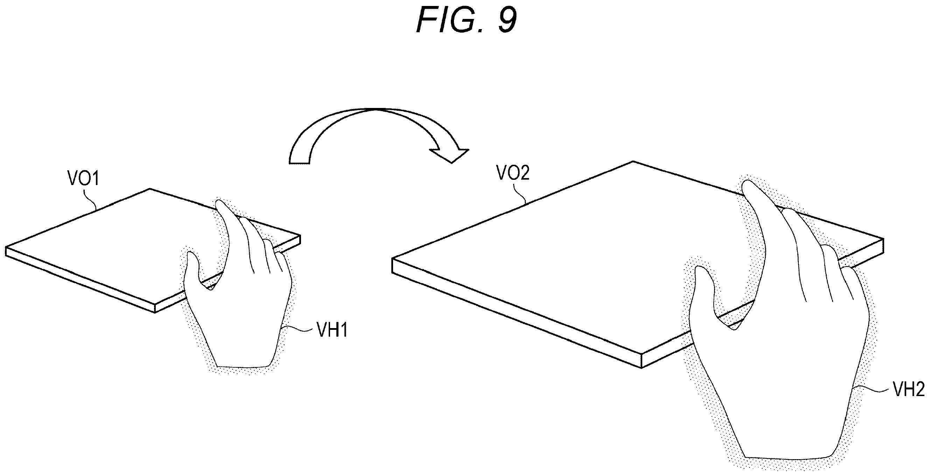

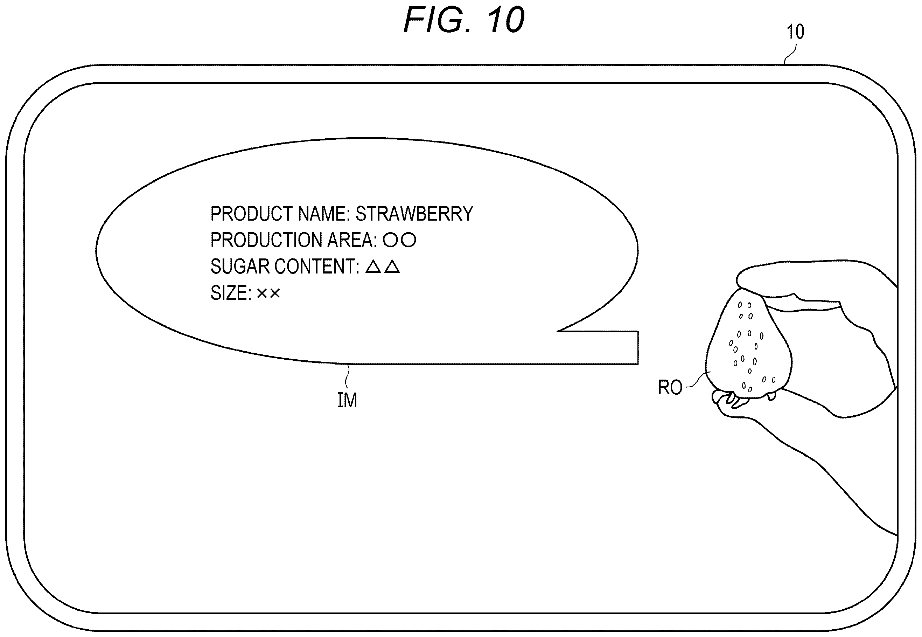

Furthermore, the AR glasses 10 according to the present disclosure are not limited to the above-described examples. Hereinafter, a modified example of the AR glasses 10 according to the present disclosure will be described with reference to Figs. 9 and 10.

### <<5. Modified examples>>

### <5.1. First modified example>

Fig. 9 is an explanatory diagram for explaining the AR glasses 10 according to a first modified example. The size of the virtual object may vary depending on the feature or state of the virtual object. For example, compared to a virtual object whose article type is "refrigerator", a virtual object whose article type is "cop" may be displayed smaller on the lens of the AR glasses 10.

Furthermore, even in a case of the same article type, a virtual object having a longer distance is displayed smaller on the lens of the AR glasses 10 than a virtual object having a shorter distance.

Therefore, in a case where the size of the hand model superimposed and displayed on the hand of the user is uniform, an event in which it is difficult for the user to hold the virtual object may occur with respect to the virtual objects having different sizes.

Therefore, the display processing unit 117 according to the present disclosure may control the size of the hand model of the user according to the size of the virtual object designated by the user.

For example, as illustrated in Fig. 9, the display processing unit 117 displays a hand model VH1 of the user on the lens of the AR glasses 10 in accordance with the size of a virtual object VO1 designated by the user.

Then, for example, in a case where the user approaches the virtual object V01, the virtual object V01 is displayed large like a virtual object VO2 illustrated in Fig. 9.

In this case, the display processing unit 117 may display, on the lens of the AR glasses 10, a hand model VH2 of the user that is enlarged according to the size of the virtual object VO2 that becomes larger as the user approaches.

As a result, it is possible to reduce the risk that the hand model of the user is buried in the virtual object regardless of the size of the virtual object, and conversely, the risk that the virtual object is buried in the hand of the user. As a result, the user can operate the virtual object using the size of the hand model more suitable for the operation of the virtual object, and the display processing unit 117 can further improve the convenience of the user.

### <5.2. Second modified example>

Fig. 10 is an explanatory diagram for explaining the AR glasses 10 according to a second modified example. Although the specific example in which the application processing unit 115 controls the mode related to the operation of the virtual object designated by the user has been described above, the application processing unit 115 according to the present disclosure may control the mode related to the operation of the real object designated by the user. Note that, in the case of the real object, a state in which one of the first finger and the second finger is in contact with the real object by the user may be set as a state designated by the user.

For example, the application processing unit 115 may switch the mode related to the operation of the real object when the contact information between the third finger and the real object is further acquired while the contact information between the first finger and the real object and the contact information between the second finger and the real object are acquired.

For example, when the third finger further performs a tap operation or a hold operation on the real object while the contact information between the first finger and the real object and the contact information between the second finger and the real object are acquired, the application processing unit 115 may switch the operation mode to an additional information display mode for displaying additional information related to the real object.

For example, in a case where the display mode is switched to the additional information display mode, the application processing unit 115 may display, for example, a display screen including additional information IM of a real object RO on the lens of the AR glasses 10 as illustrated in Fig. 10.

Furthermore, the storage unit 130 may hold various types of information regarding the real object RO such as "product name", "production area", and "sugar content" as illustrated in Fig. 10. Furthermore, the additional information IM is not limited to such an example. For example, the additional information IM may include various types of information such as "price" of the real object RO and "comment of another user".

Furthermore, the application processing unit 115 may generate a virtual object as a copy of the real object RO when the third finger further performs a tap operation or a hold operation on the real object while the contact information between the first finger and the real object and the contact information between the second finger and the real object are acquired.

### <<6. Hardware configuration example>>

The embodiments of the present disclosure have been described above. The information processing described above is realized by cooperation of software and hardware of the AR glasses 10 described below.

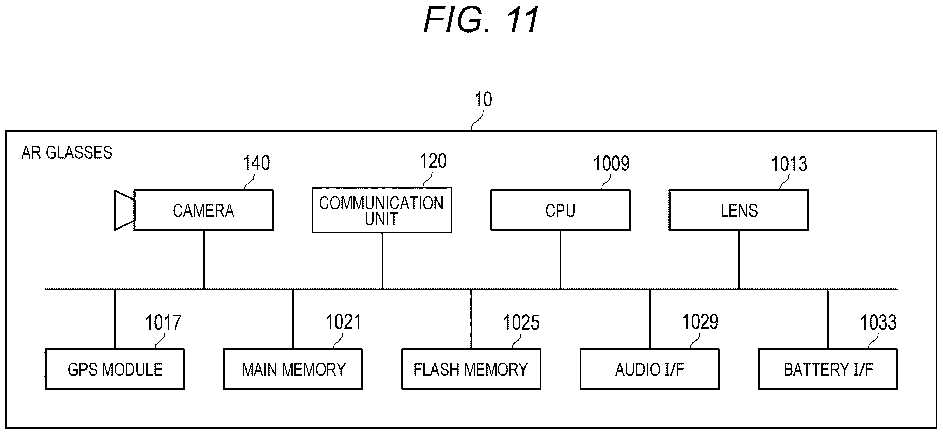

Fig. 11 is a block diagram illustrating an example of a hardware configuration of the AR glasses 10 according to the present disclosure. As illustrated in Fig. 11, the AR glasses 10 according to the present disclosure include a camera 140, a communication unit 120, a central processing unit (CPU) 1009, a lens 1013, a global positioning system (GPS) module 1017, a main memory 1021, a flash memory 1025, an audio interface 1029, and a battery interface 1033. Note that, since the communication unit 120 and the camera 140 have been described above, description thereof is omitted.

The CPU 1009 functions as an arithmetic processing device and a control device, and controls the overall operation in the AR glasses 10 according to various programs. Furthermore, the CPU 1009 cooperates with the main memory 1011, the flash memory 1015, and software to be described later, so that the functions of, for example, the imaging processing unit 111, the posture detection unit 113, the application processing unit 115, and the display processing unit 117 can be realized.

The lens 1013 is, for example, a transmissive display device including a display such as a cathode ray tube (CRT) display device, a liquid crystal display (LCD), or an organic light emitting diode (OLED) device, and converts video data into video and outputs the video. The lens 1013 may display, for example, a display screen including a virtual object. Note that, in a case where the information processing apparatus according to the present disclosure is an HMD, the HMD may include a non-transmissive display instead of the lens 1013.

The GPS module 1017 measures the latitude, longitude, altitude, or the like of the AR glasses 10 using a GPS signal received from a GPS satellite. For example, by using information measured by the GSP signal, the display processing unit 117 may display a virtual object based on information such as latitude, longitude, or altitude.

The main memory 1021 temporarily stores programs used in the execution of the CPU 1009, parameters that appropriately change in the execution, and the like. The flash memory 1025 stores programs, operation parameters, and the like used by the CPU 1009.

The CPU 1009, the main memory 1021, and the flash memory 1025 are mutually connected by an internal bus, and are further connected to the communication unit 120, the lens 1013, the GPS module 1017, the audio interface 1029, and the battery interface 1033 via an input/output interface.

The audio interface 1029 connects other devices that generate sound, such as speakers and earphones. The battery interface 1033 connects a battery or a battery-mounted device.

### <<7. Supplement>>

The preferred embodiments of the present disclosure have been described in detail above with reference to the accompanying drawings, but the present disclosure is not limited to such examples. It is apparent that a person having ordinary knowledge in the technical field to which the present disclosure belongs can devise various change examples or modification examples within the scope of the technical idea described in the claims, and it will be naturally understood that such examples also belong to the technical scope of the present disclosure.

For example, when the operation (for example, a tap operation or a hold operation) by the third finger is possible, the display processing unit 117 may display guide information that can be operated by the third finger on the lens of the AR glasses 10. Furthermore, when the user operates with the third finger without looking at the guide information, for example, when the guide information is not included in the angle of view of the lens, the display processing unit 117 may hide the guide information.

Furthermore, each step in the processing of the information processing system of the present specification is not necessarily processed in time series in the order described as the flowchart. For example, each step in the processing of the information processing system may be processed in an order different from the order described as the flowchart or in parallel.

Furthermore, it is also possible to create a computer program for causing hardware such as a CPU, a ROM, and a RAM built in the AR glasses 10 to exhibit functions equivalent to the respective configurations of the AR glasses 10 described above. Furthermore, a non-transitory storage medium storing the computer program is also provided.

Furthermore, the effects described in this specification are merely exemplary or illustrative, and not restrictive. That is, the technology according to the present disclosure can exhibit other effects apparent to those skilled in the art from the description of this specification, in addition to the effects described above or instead of the effects described above.

Note that the following configurations also fall within the technological scope of the present disclosure.
(1) An information processing apparatus including:
   an acquisition unit that acquires motion information indicating a motion of a user; and
   an operation control unit that, in a case where an object is designated by the user, switches a mode related to an operation of the object when contact information of a third finger is further acquired while contact information of a first finger and contact information of a second finger of the user are acquired by the acquisition unit.
(2) The information processing apparatus according to (1) described above, in which
   the object includes a virtual object, and
   the operation control unit switches a mode related to an operation of the virtual object.
(3) The information processing apparatus according to (2) described above, in which
   the operation control unit switches a mode related to an operation of the virtual object when second contact information indicating that the third finger has come into contact with the first finger or the second finger is further acquired while first contact information indicating that the first finger has come into contact with the second finger is acquired.
(4) The information processing apparatus according to (3) described above, in which
   the operation control unit switches the mode related to the operation of the virtual object from a first mode to a second mode when the first contact information is acquired, and switches the mode related to the operation of the virtual object from the second mode to a third mode when the second contact information is further acquired while the first contact information is acquired.
(5) The information processing apparatus according to (4) described above, in which
   the operation control unit switches the mode related to the operation of the virtual object from the second mode to the third mode when the second contact information is further acquired for less than a predetermined time while the first contact information is acquired.
(6) The information processing apparatus according to (4) or (5) described above, in which
   the operation control unit switches from the second mode to a fourth mode when the second contact information further continues for a predetermined time or more while the first contact information is acquired.
(7) The information processing apparatus according to any one of (1) to (6) described above, in which
   the first finger, the second finger, and the third finger are fingers of one of a left hand and a right hand of the user.
(8) The information processing apparatus according to any one of (4) to (7) described above, in which
   the first mode includes a mode in which the virtual object can be designated by the user, and
   the second mode includes a mode in which the virtual object designated by the user is movable.
(9) The information processing apparatus according to (8) described above, in which
   the second mode includes a mode in which the virtual object designated by the user is directly movable, and
   the third mode includes a mode in which the virtual object designated by the user is remotely movable.
(10) The information processing apparatus according to (9) described above, in which
   the fourth mode includes a mode in which a posture of the virtual object designated by the user is adjustable.
(11) The information processing apparatus according to any one of (1) to (10) described above, further including
   a display control unit that controls display according to a feature of the virtual object,
   in which the display control unit controls a size of a virtual hand of the user according to a size of the virtual object designated by the user.
(12) The information processing apparatus according to (11) described above, in which
   the display control unit controls display of guide information that can be operated with the third finger when an operation with the third finger is possible.
(13) The information processing apparatus according to any one of (2) to (12) described above, in which
   the acquisition unit acquires position information of a hand of the user, and
   the operation control unit switches the mode related to the operation of the virtual object on a basis of the position information of the hand of the user when the second contact information is further acquired while the first contact information is acquired.
(14) The information processing apparatus according to (13) described above, in which
   the acquisition unit acquires posture information of a hand of the user, and
   the operation control unit switches the mode related to the operation of the virtual object on a basis of the posture information of the hand of the user when the second contact information is further acquired while the first contact information is acquired.
(15) The information processing apparatus according to any one of (1) to (6) described above, in which
   the first finger and the second finger are fingers of one of a left hand and a right hand of the user, and
   the third finger is a finger of the other hand of the left hand or the right hand of the user.
(16) The information processing apparatus according to any one of (2) to (15) described above, in which
   the operation control unit switches the mode related to the operation of the virtual object when a predetermined motion of the user is further acquired while the first contact information and the second contact information are acquired.
(17) The information processing apparatus according to (1) described above, in which
   the object includes a real object, and
   the operation control unit switches a mode related to an operation of the real object when contact information between the third finger and the real object is further acquired while contact information between the first finger and the real object and contact information between the second finger and the real object are acquired.
(18) The information processing apparatus according to (17) described above, in which
   the operation control unit switches to a control mode that displays additional information regarding the real object.
(19) An information processing method executed by a computer, the information processing method including:
   acquiring motion information indicating a motion of a user; and
   in a case where an object is designated by the user, switching a mode related to an operation of the object when contact information of a third finger is further acquired while contact information of a first finger and contact information of a second finger of the user are acquired.
(20) A program causing a computer to realize:
   an acquisition function of acquiring motion information indicating a motion of a user; and
   an operation control function of, in a case where an object is designated by the user, switching a mode related to an operation of the object when contact information of a third finger is further acquired while contact information of a first finger and contact information of a second finger of the user are acquired by the acquisition function.

### REFERENCE SIGNS LIST

- 10: AR glasses
- 110: Control unit
- 111: Imaging processing unit
- 113: Posture detection unit
- 115: Application processing unit
- 117: Display processing unit
- 120: Communication unit
- 130: Storage unit
- 140: Camera
- 20: Hand glove

## Claims

1. An information processing apparatus comprising:
an acquisition unit that acquires motion information indicating a motion of a user; and
an operation control unit that, in a case where an object is designated by the user, switches a mode related to an operation of the object when contact information of a third finger is further acquired while contact information of a first finger and contact information of a second finger of the user are acquired by the acquisition unit.

2. The information processing apparatus according to claim 1, wherein
the object includes a virtual object, and
the operation control unit switches a mode related to an operation of the virtual object.

3. The information processing apparatus according to claim 2,
the operation control unit switches a mode related to an operation of the virtual object when second contact information indicating that the third finger has come into contact with the first finger or the second finger is further acquired while first contact information indicating that the first finger has come into contact with the second finger is acquired.

4. The information processing apparatus according to claim 3, wherein
the operation control unit switches the mode related to the operation of the virtual object from a first mode to a second mode when the first contact information is acquired, and switches the mode related to the operation of the virtual object from the second mode to a third mode when the second contact information is further acquired while the first contact information is acquired.

5. The information processing apparatus according to claim 4, wherein
the operation control unit switches the mode related to the operation of the virtual object from the second mode to the third mode when the second contact information is further acquired for less than a predetermined time while the first contact information is acquired.

6. The information processing apparatus according to claim 5, wherein
the operation control unit switches from the second mode to a fourth mode when the second contact information further continues for a predetermined time or more while the first contact information is acquired.

7. The information processing apparatus according to claim 6, wherein
the first finger, the second finger, and the third finger are fingers of one of a left hand and a right hand of the user.

8. The information processing apparatus according to claim 7, wherein
the first mode includes a mode in which the virtual object can be designated by the user, and
the second mode includes a mode in which the virtual object designated by the user is movable.

9. The information processing apparatus according to claim 8, wherein
the second mode includes a mode in which the virtual object designated by the user is directly movable, and
the third mode includes a mode in which the virtual object designated by the user is remotely movable.

10. The information processing apparatus according to claim 9, wherein
the fourth mode includes a mode in which a posture of the virtual object designated by the user is adjustable.

11. The information processing apparatus according to claim 10, further comprising
a display control unit that controls display according to a feature of the virtual object,
wherein the display control unit controls a size of a virtual hand of the user according to a size of the virtual object designated by the user.

12. The information processing apparatus according to claim 11, wherein
the display control unit controls display of guide information that can be operated with the third finger when an operation with the third finger is possible.

13. The information processing apparatus according to claim 12, wherein
the acquisition unit acquires position information of a hand of the user, and
the operation control unit switches the mode related to the operation of the virtual object on a basis of the position information of the hand of the user when the second contact information is further acquired while the first contact information is acquired.

14. The information processing apparatus according to claim 13, wherein
the acquisition unit acquires posture information of a hand of the user, and
the operation control unit switches the mode related to the operation of the virtual object on a basis of the posture information of the hand of the user when the second contact information is further acquired while the first contact information is acquired.

15. The information processing apparatus according to claim 6, wherein
the first finger and the second finger are fingers of one of a left hand and a right hand of the user, and
the third finger is a finger of an other hand of the left hand or the right hand of the user.

16. The information processing apparatus according to claim 14, wherein
the operation control unit switches the mode related to the operation of the virtual object when a predetermined motion of the user is further acquired while the first contact information and the second contact information are acquired.

17. The information processing apparatus according to claim 1, wherein
the object includes a real object, and
the operation control unit switches a mode related to an operation of the real object when contact information between the third finger and the real object is further acquired while contact information between the first finger and the real object and contact information between the second finger and the real object are acquired.

18. The information processing apparatus according to claim 17, wherein
the operation control unit switches to a control mode that displays additional information regarding the real object.

19. An information processing method executed by a computer, the information processing method comprising:
acquiring motion information indicating a motion of a user; and
in a case where an object is designated by the user, switching a mode related to an operation of the object when contact information of a third finger is further acquired while contact information of a first finger and contact information of a second finger of the user are acquired.

20. A program causing a computer to realize:
an acquisition function of acquiring motion information indicating a motion of a user; and
an operation control function of, in a case where an object is designated by the user, switching a mode related to an operation of the object when contact information of a third finger is further acquired while contact information of a first finger and contact information of a second finger of the user are acquired by the acquisition function.
